(19) Europäisches Patentamt
European Patent Office
Office européen des brevets

(11) Veröffentlichungsnummer : **0 361 378 B1**

(12) **EUROPÄISCHE PATENTSCHRIFT**

(45) Veröffentlichungstag der Patentschrift :
25.09.91 Patentblatt 91/39

(51) Int. Cl.⁵ : **G11B 15/68**

(21) Anmeldenummer : 89117715.6

(22) Anmeldetag : 26.09.89

(54) **Vollautomatisch arbeitendes Bandbedienungsarchiv.**

Teilanmeldung 91100569.2 eingereicht am 26/09/89.

(30) Priorität : 29.09.88 DE 3832994
03.06.89 DE 3918198

(43) Veröffentlichungstag der Anmeldung :
04.04.90 Patentblatt 90/14

(45) Bekanntmachung des Hinweises auf die Patenterteilung :
25.09.91 Patentblatt 91/39

(84) Benannte Vertragsstaaten :
**BE DE FR GB IT LU NL**

(56) Entgegenhaltungen :
**EP-A- 0 288 165**
**DE-A- 3 621 790**
**FR-A- 2 115 764**
**US-A- 4 754 445**

(56) Entgegenhaltungen :
**IBM TECHNICAL DISCLOSURE BULLETIN vol. 16, no. 5, Oktober 1973, NEW YORK, US Seiten 1584 - 1585; R. L. SCHAAF: "CARTRIDGE HANDLING SYSTEMS"**
**IBM TECHNICAL DISCLOSURE BULLETIN vol. 25, no. 10, März 1983, NEW YORK, US Seiten 5006 - 5007; B. L. CALLENDER: "TAPE CAR-TRIDGE LIBRARY SYSTEM"**
**PATENT ABSTRACTS OF JAPAN vol. 10, no. 387 (P-530)(2444) 25 Dezember 1986, & JP-A-61 175967 (NITSUKIYOU SEISAKUSHO) 07 August 1986,**
**"A new level of automation in work-in-process handling", Modern Materials Handling, November 19, 1982**

(73) Patentinhaber : **GRAU GMBH & CO.**
**Osterlängstrasse 47**
**W-7070 Schwäbisch Gmünd 10 (DE)**

(72) Erfinder : **Baur, Rolf**
**Unterm Stein 15**
**verstorben (DE)**

(74) Vertreter : **Hoeger, Stellrecht & Partner**
**Uhlandstrasse 14 c**
**W-7000 Stuttgart 1 (DE)**

EP 0 361 378 B1

## Beschreibung

Die Erfindung betrifft ein vollautomatisch arbeitendes Bandbedienungsarchiv mit einem Kassettenfächer für Bandkassetten aufweisenden Speicher, mit mindestens einer Bandeinheit zum Lesen und Beschreiben der Bandkassetten und mit mindestens einem Roboter zum Transportieren der Bandkassetten zwischen Speicher und Bandeinheit.

Aus der DE-PS 2519870 ist ein vollautomatsich arbeitendes Bandbedienungsarchiv bekannt, bei welchem eine Greifeinrichtung zwischen zwei beiderseits einer Verschiebebahn der Greifeinrichtung angeordneten Kassettenspeichern verfahrbar ist. Außerdem sind jeweils hinter den Kassettenspeichern, das heißt auf der der Verschiebebahn gegenüberliegenden Seite, Bandeinheiten zum Abspielen der Bänder angeordnet. Der Greifer kann nun die Bandkassetten aus dem Speicher herausnehmen und zu der jeweiligen Bandeinheit transportieren, wobei eine Durchreichevorrichtung vorgesehen ist, mit welcher die Bandkassette durch den Speicher hindurch zu der auf der Rückseite des Speichers angeordneten Bandeinheit transportierbar ist, in welcher ein beabsichtigter Schreib- und Lesevorgang erfolgt.

Aus der DE-OS 3621790 ist ebenfalls ein vollautomatisch arbeitendes Bandbedienungsarchiv bekannt, bei welchem ein Speicher mit auf einem Kreisbogen angeordneten Regaleinheiten vorgesehen ist. Im Zentrum des Kreisbogens ist eine erste Greifeinrichtung vorgesehen, welche in der Lage ist, Bandkassetten aus den Regaleinheiten zu entnehmen oder in diese einzusetzen. Diese Greifeinrichtung gibt dann die Bandkassetten durch eine Lücke zwischen den Regaleinheiten zu einer zweiten Greifeinrichtung, die dann ihrerseits in der Lage ist, die Bandkassetten zu einem bestimmten Schreib- oder Lesevorgang in eine der Bandeinheiten zum Abspielen derselben einzusetzen oder aus diesen zu entnehmen. Die zweite Greifeinrichtung ist dabei zentral zwischen insgesamt vier Speichern mit auf einem Kreisbogen angeordneten Regaleinheiten positioniert, wobei jede Regaleinheit die zentral angeordnete erste Greifeinrichtung aufweist.

Bei diesen bekannten Bandbedienungsarchiven besteht das Problem, daß eine Greifeinrichtung nur eine bestimmte Zahl von Transferoperationen pro Zeiteinheit durchführen kann und daß die Vergrößerung eines derartigen Bandbedienungsarchivs hinsichtlich des zur Verfügung stehenden Speicherplatzes durch die pro Zeiteinheit durch eine Greifeinrichtung transferierbaren Bandkassetten begrenzt ist.

Aus der EP-A-0288165 (nachveröffentlicht) ist ein automatisches Kassettenwechselsystem bekannt, bei welchem mehrere Speichereinheiten hintereinander angeordnet sind. Zum Transport der Kassetten sind zwei Roboter auf denselben Schienen vorgesehen, wobei ein Hauptroboter einen Austausch zwischen einem den Schreib-/Leseeinheiten benachbarten Speicher und den Schreib-/Leseeinheiten vornimmt, während der zweite Roboter einen Transport zwischen zusätzlichen und als Drehtürme ausgebildeten Speichereinheiten und einem Zwischenspeicher vornimmt, wobei von letzterem ausgehend der Hauptroboter den Transport der Kassetten zu den Schreib-/Leseeinheiten vornimmt.

Bei einer derartigen Anordnung mit zwei Robotern auf denselben Schienen besteht das Problem, daß sich die Transportleistung auch durch zwei Roboter nicht in gewünschter Weise erhöhen läßt, da diese sich gegenseitig behindern und stets eine Übergabe vom ersten auf den zweiten Roboter notwendig ist, um die Kassetten letztendlich in die Schreib-/Leseeinheiten einzusetzen.

Aus der Zeitschrift "Modern Materials Handling", 19. November 1982, ist durch den Artikel mit dem Titel "A new level of automation in work-in-process handling" ein lineares Transportsystem für Montagezwecke bekannt. Zweck dieses Transportsystems ist der lineare Weitertransport von Werkstücken in Schachteln oder Kästen über Transportbänder von einer Verarbeitungsstelle zur nächsten. Hierfür sind in eine Richtung wirkende Transportvorrichtungen vorgesehen, wobei mit einer Beladevorrichtung ein Pufferspeicher beladbar ist und mit einer Entladevorrichtung der Pufferspeicher entladbar ist. Der Pufferspeicher wird somit mit den Schachteln oder Kästen durch die Beladevorrichtung befüllt und durch die Entladevorrichtung entleert.

Aus dem IBM Technical Disclosure Bulletin Vol. 16, Nr. 5, Oktober 1973, Seiten 1584 bis 1585 ist ein "Cartridge Handling System" bekannt, welches Speicherkarusselle für Datenspeicherkassetten aufweist, wobei mindestens zwei Roboter Zugriff zu jedem Karussell haben. Diese Roboter sind lediglich um eine Drehachse drehbar und ansonsten unbeweglich fixiert.

Darüberhinaus ist jedem Roboter zum Beschreiben und Lesen der Datenspeicherkassetten eine sogenannte "processing unit" zugeordnet, wobei alle "processing units" mit einem Benutzer verbunden sind.

Das offenbarte System arbeitet nicht mit einem gemeinsamen "Speicherpool" für die Bandkassetten. Vielmehr wird eines der Karusselle als sogenannte "closed data base" und das andere Karussell als sogenannte "open data base" verwendet.

Aus dem IBM Technical Disclosure Bulletin Vol. 25, Nr. 10, März 1983, Seiten 5506 bis 5507 ist unter dem Titel "Tape Cartridge Library System" eine Speichereinrichtung für Datenspeicherkassetten bekannt, bei welcher übereinander angeordnete Karusselle vorgesehen sind, die einen mittigen Durchbruch aufweisen, so daß sich durch alle Karusselle hindurch ein mittiger Kanal ergibt. In diesem mittigen Kanal sind Greifer bewegbar, die von diesem mittigen Kanal aus auf um diesen Kanal herum in den Karussellen angeordneten Kassetten zugreifen. Ferner sind die Karusselle in Gruppen zusammengefaßt, die beiderseits eines mittigen Bereichs angeordnet sind, in welchem die in dem inneren Kanal bewegbaren Greifer die Möglichkeit haben, Kassetten zu außerhalb der Karusselle angeordneten Leseeinheiten zu transportieren.

Diese Anordnung hat den Nachteil, daß die konstruktive Realisierung derselben Probleme aufwirft, da die Lagerung und Aufstellung derartiger, einen inneren Kanal bildender Karusselle mit Problemen verbunden ist. Darüberhinaus kann die Speicherkapazität der Gesamtheit der Karusselle nicht in praktikabler Weise beliebig erhöht werden, da die Karusselle vertikal übereinander angeordnet sein müssen und somit beim Einbau in üblichen Räumen bereits eine Begrenzung durch die Raumhöhe gegeben ist.

Darüberhinaus ist in dieser Druckschrift nicht angegeben, wie der gesamte, den Greifer bewegende Roboter angeordnet sein soll. Auch dessen Anordnung im mittleren Kanal ist mit Problemen verbunden.

Schließlich ist dieses System nicht beliebig erweiterbar, da dies eine Änderung der Konzeption für den jeweiligen Roboter erforderlich macht.

Ausgehend von der letztgenannten Druckschrift liegt der Erfindung die Aufgabe zugrunde, ein vollautomatisch arbeitendes Bandbedienungsarchiv zu schaffen, welches bei einfachem konstruktiven Aufbau eine große Transferkapazität für Bandkassetten aufweist und in einfacher Weise hinsichtlich der Speicherkapazität erweiterbar ist.

Diese Aufgabe wird gelöst durch ein vollautomatisch arbeitendes Bandbedienungsarchiv mit einem Kassettenfächer für Bandkassetten aufweisenden Speicher, der als Wendespeicher mit mindestens zwei unabhängig voneinander bewegbaren Wendeeinheiten ausgebildet ist, wobei sämtliche Kassettenfächer jeder Wendeeinheit sowohl in eine erste Roboterzugriffsposition als auch in eine zweite Roboterzugriffsposition bringbar sind, mit einem ersten Roboter und einem zweiten Roboter zum Transportieren der Bandkassetten zwischen dem Speicher und mindestens einer jedem Roboter ausschließlich zugeordneten Bandeinheit, wobei dem ersten Roboter die ersten Roboterzugriffspositionen und dem zweiten Roboter die zweiten Roboterzugriffspositionen zugeordnet sind und wobei, um ein gleichzeitiges Arbeiten der Roboter zu ermöglichen, jeder Roboter einen Aktionsbereich aufweist, der sich mit dem des jeweils anderen Roboters nicht überschneidet, wobei erfindungsgemäß die Wendeeinheiten auf einer Bodenfläche des Speichers in einer Längsrichtung aufeinanderfolgend angeordnet sind, der erste Roboter und der zweite Roboter längs einer ersten Bahn bzw. längs einer zweiten Bahn verfahrbar angeordnet sind, die erste und die zweite Bahn im wesentlichen parallel zueinander und parallel zu der Längsrichtung verlaufen und wobei die ersten Roboterzugriffspositionen längs der ersten Bahn und die zweiten Roboterzugriffspositionen längs der zweiten Bahn angeordnet und von im wesentlichen einander gegenüberliegenden Außenseiten des Wendespeichers für die Roboter zugänglich sind.

Weitere vorteilhafte Lösungen sind Gegenstand der Unteransprüche.

Die vorliegende Erfindung hat den großen Vorteil, daß durch die Bandkassetten im Wendespeicher ein einziger "Informations-Speicherpool" beibehalten wird, so daß generell die Möglichkeit besteht, zum Lesen oder Schreiben einer bestimmten Information Jede im Speicher deponierte Bandkassette durch die Roboter zu Jeder Bandeinheit zu transferieren, wobei gleichzeitig der Speicher beliebig erweiterbar ist, da man in diesem Fall die doppelte Roboterleistung zum Transport von Bandkassetten zu den Bandeinheiten zur Verfügung hat.

Die Erfindung äußert sich insbesondere vorteilhaft darin, daß bei dem erfindungsgemäßen Bandbedienungsarchiv die Bandkassetten für einen bestimmten Lese- oder Schreibvorgang sowohl von dem ersten als auch von dem zweiten Roboter greifbar und in eine der diesen zugeordneten Bandbedienungseinheiten einsetzbar sind, so daß beispielsweise bei der Reparatur oder dem Ausfall eines Roboters der gesamte "Informationspool" durch den anderen Roboter zugänglich ist.

Darüber hinaus ist durch die Tatsache, daß die beiden Roboter von verschiedenen Roboterzugriffspositionen aus auf den Speicher zugreifen, eine gegenseitige Behinderung der Roboter beim Zugriff auf Bandkassetten ausgeschlossen, so daß die Roboter unabhängig voneinander arbeiten können und Maßnahmen zur Vermeidung einer gegenseitigen Behinderung der Roboter nicht notwendig sind.

Schließlich ist ein derartiges Bandbedienungsarchiv vom Aufbau her sehr kostengünstig, da zwei selbständige Roboter einsetzbar sind.

Von den grundsätzlichen Möglichkeiten her gesehen könnten die Bandeinheiten so aufgestellt sein, daß beide Roboter auf jede Bandeinheit Zugriff haben, da die Bandkassetten relativ lange in den Bandeinheiten verbleiben und lediglich von einem Roboter eine Bandkassette entnommen werden kann. Im Hinblick auf eine möglichst einfache Steuerung und im Hinblick auf die Tatsache, daß in der Regel mehrere Bandeinheiten von einem Roboter bedient werden, ist es am einfachsten, wenn jedem Roboter mindestens eine Bandeinheit ausschließlich zugeordnet ist. Damit läßt sich jeder Roboter mit der maximalen Transferkapazität betreiben.

Obwohl erfindungsgemäß die Zugriffe zum Speicher von getrennten Roboterzugriffspositionen aus erfolgen, könnten gewisse Konstellationen eintreten, bei denen die Roboter sich hinsichtlich ihrer Aktionsbereiche überlappen. Um auch dies zu verhindern und somit zur steuerungstechnisch einfachsten Lösung zu kommen, ist es von Vorteil, wenn jeder Roboter einen Aktionsbereich aufweist, der sich mit dem des jeweils anderen Roboters nicht überschneidet.

Besonders vorteilhaft im Rahmen der vorliegenden Erfindung ist es, wenn die Roboterzugriffspositionen von einer Außenseite, insbesondere einer Außenumfangsseite, des Wendespeichers für die Roboter zugänglich sind.

Der erfindungsgemäße Wendespeicher kann grundsätzlich auf die unterschiedlichste Art und Weise ausgebildet sein, solange er in der Lage ist, die obengenannten Anforderungen zu erfüllen. Als besonders zweckmäßig hat es sich erwiesen, wenn der Wendespeicher mindestens eine bewegbare und die Kassettenfächer umfassende Wendeeinheit aufweist.

Bei dieser Wendeinheit handelt es sich im einfachsten Fall um einen drehbaren Regalturm, wobei vorteilhafterweise die Roboterzugriffspositionen von einer Außenumfangsseite des Regalturms für die Roboter zugänglich sind.

Noch besser ist es jedoch, um insbesondere auch die Roboter möglichst unabhängig voneinander betreiben zu können und Teile des Speichers unabhängig voneinander wenden zu können, wenn der Wendespeicher mindestens zwei Wendeeinheiten aufweist.

Im einfachsten Fall handelt es sich auch hierbei um einen Speicher, welcher Regaltürme aufweist, wobei vorzugsweise die drehbaren Regaltürme mit ihren Drehachsen parallel zueinander ausgerichtet sind.

Ferner dient der Entkopplung der Tätigkeit der beiden Roboter, wenn die Kassettenfächer jeder Wendeeinheit sowohl in die erste als auch in die zweite Roboterzugriffsposition bringbar sind. Vorteilhafterweise ist dann ein Wendespeicher mit mehreren Wendeeinheiten so ausgebildet, daß die Kassettenfächer jeder Wendeeinheit sowohl in eine nur für die Kassettenfächer dieser Wendeeinheit vorgesehene erste als auch eine für diese Kassettenfächer vorgesehene zweite Roboterzugriffsposition bringbar sind und folglich der Speicher bei mehreren Wendeeinheiten mehrere jeweils zu einer Wendeeinheit gehörende erste und mehrere jeweils zu einer Wendeeinheit gehörende zweite Roboterzugriffspositionen aufweist.

Hinsichtlich der Anordnung der Roboter hat es sich als besonders zweckmäßig erwiesen, wenn die erste und die zweite Roboterzugriffsposition im wesentlichen auf einander gegenüberliegenden Seiten des Speichers angeordnet sind, da damit konstruktiv eine einfache Möglichkeit besteht, die beiden Roboter unabhängig voneinander arbeiten zu lassen.

Bezüglich der Ausbildung der Roboter selbst wurden im Rahmen der bisherigen Ausführungsbeispiele keine näheren Angaben gemacht. So ist es im Rahmen einer bevorzugten Ausführungsform möglich, daß der erste und der zweite Roboter stehende Roboter sind. Soll jedoch das Bandbedienungsarchiv hinsichtlich der Kapazität des Speichers möglichst groß gewählt werden, so ist es von Vorteil, wenn der erste und der zweite Roboter längs einer ersten bzw. einer zweiten Bahn verfahrbar angeordnet sind.

In diesem Fall hat es sich als besonders zweckmäßig erwiesen, wenn die Roboter auf im wesentlichen parallelen Bahnen verfahrbar sind.

Insbesondere bei Wendespeichern mit mehreren Wendeeinheiten ist vorzugsweise vorgesehen, daß die ersten Roboterzugriffspositionen längs der ersten Bahn und die zweiten Roboterzugriffspositionen längs der zweiten Bahn angeordnet sind und somit jeder Roboter in einfacher Weise durch Verfahren längs seiner Bahn alle ihm zugeordneten Roboterzugriffspositionen erreichen kann.

Um einen sicheren Zugriff des Roboters zu den einzelnen Kassettenfächern zu ermöglichen, ist vorgesehen, daß der Speicher so ausgebildet ist, daß die Kassettenfächer in der ersten und der zweiten Roboterzugriffsposition stets eine definierte Position einnehmen und somit von der Steuerung des Roboters her genau das Anfahren jedes Kassettenfaches vorgegeben werden kann.

Bei den bislang beschriebenen Ausführungsbeispielen wurden hinsichtlich der Frage, wie die Bandeinheiten relativ zum Wendespeicher angeordnet sein sollen, keine näheren Angaben gemacht. So ist es bei einem Ausführungsbeispiel günstig, wenn die dem jeweiligen Roboter zugeordnete Bandeinheit und der Wendespeicher auf derselben Seite der Bahn des jeweiligen Roboters angeordnet sind.

Insbesondere läßt sich ein derartiges System im einfachsten Fall dadurch realisieren, daß die Bandeinheiten und der Wendespeicher zwischen den Bahnen der Roboter angeordnet sind. Die vorstehend genannten Varianten der vorliegenden Erfindung sind insbesondere dann geeignet, wenn das Bandbedienungsarchiv hinsichtlich der Längenausdehnung in Richtung der Bahnen keinen Beschränkungen unterliegt, jedoch hinsichtlich der Breitenausdehnung quer zu den Bahnen.

Im Gegensatz dazu ist eine erfindungsgemäße Alternative darin zu sehen, daß die dem jeweiligen Roboter zugeordnete Bandeinheit und der Wendespeicher, bezogen auf die Bahn des jeweiligen Roboters, einander gegenüberliegend angeordnet sind. Dieser Fall ist dann vorteilhaft, wenn das Bandbedienungsarchiv hinsichtlich seiner Ausdehnung in Längsrichtung der Bahnen beschränkt ist.

Bei allen Alternativlösungen sieht eine vorteilhafte Variante vor, daß die Bandeinheiten und der Wendespeicher, bezogen auf die Bahn des jeweiligen Roboters in Längsrichtung derselben aufeinanderfolgend an-

4

geordnet sind.

In Fortbildung dieser Alternative kann es günstig sein, insbesondere um Wartungsraum hinter den Bandeinheiten zu schaffen, wenn die dem ersten Roboter zugeordneten Bandeinheiten gegenüber den dem zweiten Roboter zugeordneten Bandeinheiten in Längsrichtung der Bahnen versetzt angeordnet sind.

Bei allen vorstehend beschriebenen Ausführungsbeispielen ist es besonders vorteilhaft, wenn die Roboter direkten Zugriff zu Einlegeschächten der Bandeinheit haben, das heißt, daß den Bandeinheiten keine Einlegevorrichtungen vorgeschaltet sind.

Darüberhinaus ist es bei allen bislang beschriebenen Ausführungsbeispielen besonders vorteilhaft, wenn die Roboter identisch ausgebildet sind.

Hinsichtlich der Wendespeicher, insbesondere in der Ausführung als Regaldrehtürme, wurden bislang keine detaillierten Ausführungen gemacht. Als besonders zweckmäßig hat es sich hierbei erwiesen, wenn jeder Regaldrehturm einen elektromotorischen Antrieb und eine Sensorsteuerung zur Positionierung desselben in allen gewünschten Drehstellungen aufweist.

Als besonders vorteilhafte selbständige Lösung im Rahmen der Erfindung hat sich eine Anordnung der Bandeinheiten erwiesen, bei welcher auf zwei sich gegenüberliegenden Seiten des Speichers Bandeinheiten angeordnet sind, die jeweils einen Abstand zum Speicher aufweisen und bei welcher in diesen Abständen je ein Roboter angeordnet ist.

Bei der vorstehenden Ausführungsform ist es besonders vorteilhaft, wenn der Speicher erfindungsgemäß als Wendespeicher ausgebildet ist. Dieser kann dann zweckmäßigerweise mindestens zwei Drehtürme aufweisen. Ferner ist es bei diesem Ausführungsbeispiel günstig, wenn die Bahnen für die Roboter parallel zur Längsachse des Speichers verlaufen und vorzugsweise Schienen für die Roboter darstellen. Aus Wartungsgründen ist es dann besonders günstig, wenn die Bahnen oder Schienen mindestens eine Roboterlänge über ein Ende des Speichers hinausgeführt sind, um einen einfachen Zugang zum Roboter in dieser Position von allen Seiten zu haben.

Weitere Merkmale und Vorteile der Erfindung sind Gegenstand der nachfolgenden Beschreibung sowie der zeichnerischen Darstellung einiger Ausführungsbeispiele. In der Zeichnung zeigen :

Fig. 1    eine schematische Draufsicht auf ein erstes Ausführungsbeispiel ;
Fig. 2    eine teilweise Frontansicht in Richtung des Pfeils A ;
Fig. 3    eine schematische Draufsicht auf ein zweites Ausführungsbeispiel und
Fig. 4    eine schematische Draufsicht auf ein drittes Ausführungsbeispiel.

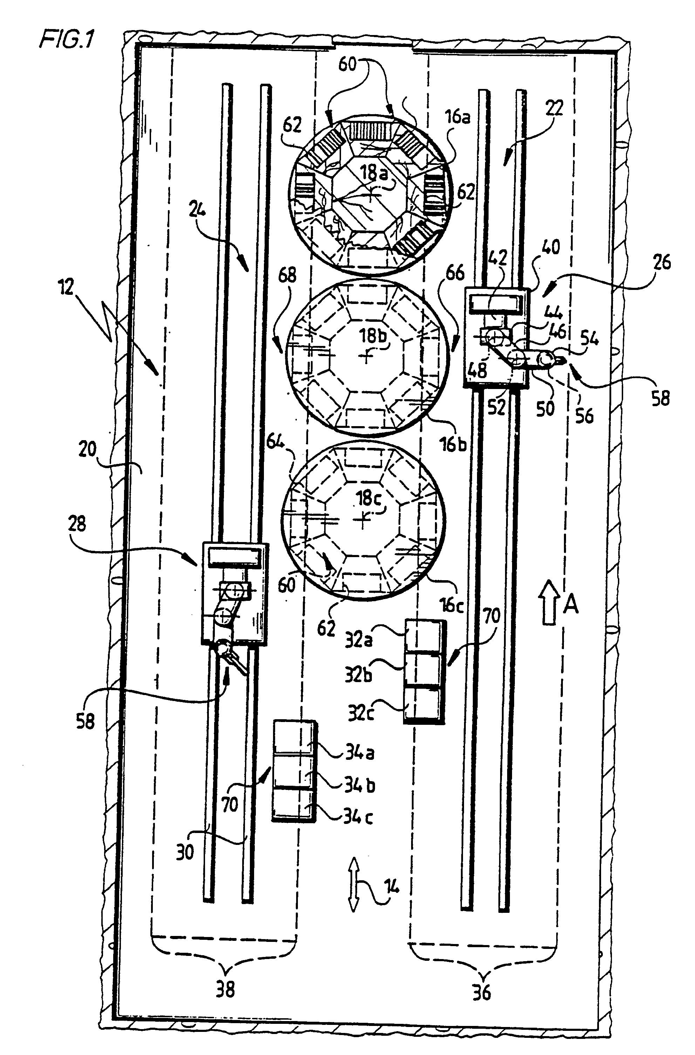

Ein erstes Ausführungsbeispiel eines erfindungsgemäßen vollautomatisch arbeitenden Bandbedienungsarchivs — dargestellt in Fig. 1 — umfaßt einen als Ganzes mit 12 bezeichneten Speicher, welcher beispielsweise drei in Längsrichtung 14 desselben aufeinanderfolgend angeordnete Regaldrehtürme 16a, b, c aufweist. Diese Regaldrehtürme 16a, b, c stehen mit ihren Drehachsen 18a, b, c senkrecht auf einer Bodenfläche 20 des Speichers 12 und sind um diese Drehachsen ohne Drehwinkelbegrenzung in beiden Drehrichtungen drehbar.

Beiderseits des Speichers 12, vorzugsweise parallel zu dessen Längsrichtung 14, verlaufen eine erste Bahn 22 und eine zweite Bahn 24, wobei auf der ersten Bahn 22 ein erster Roboter 26 und auf der zweiten Bahn 24 ein zweiter Roboter 28 in Längsrichtung derselben verfahrbar sind. Im einfachsten Fall umfassen die Bahnen 22 und 24 parallel zueinander verlaufende Schienen 30.

Längs der ersten und zweiten Bahn 22 und 24 sind zwischen denselben auf den Speicher 12 folgend zunächst erste Bandeinheiten 32a, b, c und auf diese folgend zweite Bandeinheiten 34a, b, c angeordnet, wobei die ersten Bandeinheiten 32 so neben der ersten Bahn 22 stehen, daß auf sie der erste Roboter 26 Zugriff hat und die zweiten Bandeinheiten 34 so neben der zweiten Bahn 24, daß auf sie der zweite Roboter 28 Zugriff hat.

Vorzugsweise sind dabei deren Aktionsbereiche 36 bzw. 38, in Fig. 1 gestrichelt dargestellt, das heißt diejenigen Bereiche, in welchen die Roboter 26 bzw. 28 auf eine Bandkassette zugreifen können, so gewählt, daß sie nicht überlappen.

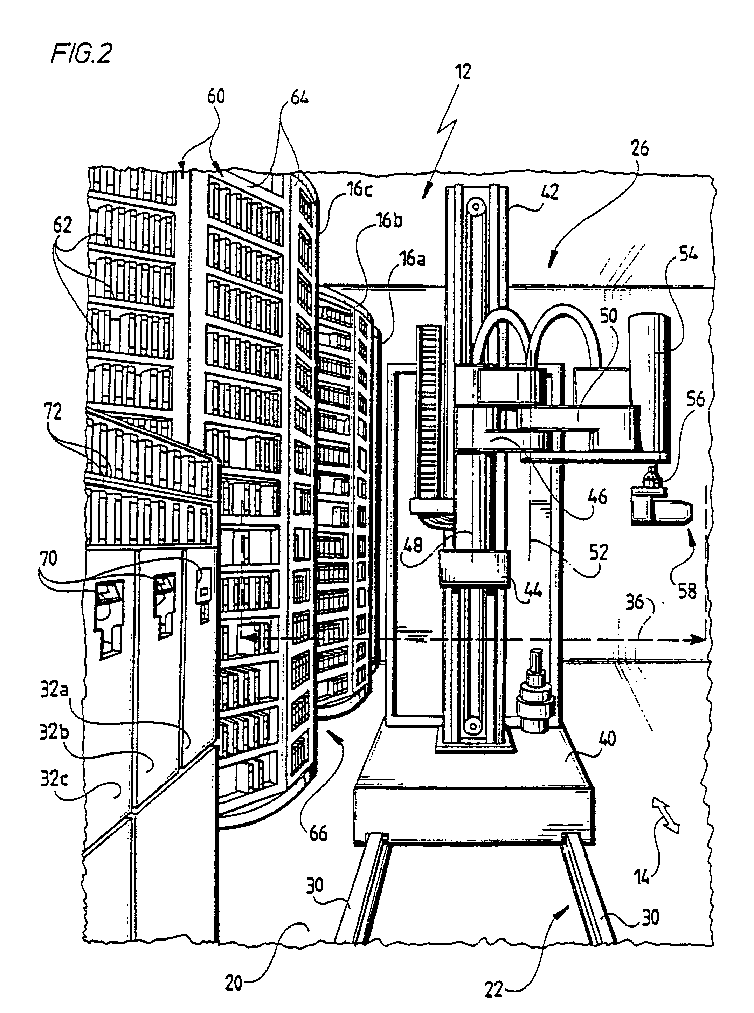

Wie aus der ausschnittsweisen Darstellung in Fig. 2 zu ersehen, umfaßt der Roboter 26 ein Fahrgestell 40, welches auf den Schienen 30 der ersten Bahn 22 angetrieben und gesteuert in definierte Positionen längs der ersten Bahn 22 verfahrbar ist. Auf diesem Fahrgestell ist eine im wesentlichen vertikal zur Ebene der Schienen 30 stehende Säule 42 angeordnet, längs welcher ein Hebetisch 44 auf und ab verfahrbar ist. Auf diesem Hebetisch 44 ist ein erster Arm 46 um eine parallel zur Säule 42 stehende erste Drehachse 48 drehbar gelagert. An diesem ersten Arm 46 ist dann seinerseits ein zweiter Arm 50 um eine zur ersten Drehachse parallele zweite Drehachse 52 schwenkbar gelagert. Am Ende des zweiten Arms 50 ist eine Längsführung 54 angeordnet, in welcher ein dritter Arm 56 parallel zur ersten Drehachse 48 und zur zweiten Drehachse 52 verschieblich geführt ist.

Dieser dritte Arm 56 trägt seinerseits einen Greifer 58 zum Greifen von Bandkassetten.

Vorzugsweise ist bei dem in Fig. 1 zeichnerisch dargestellten ersten Ausführungsbeispiel der zweite Roboter 28 identisch wie der erste Roboter 26 ausgebildet.

Die Regaldrehtürme 16a, b, c des Speichers 12 sind vorzugsweise aus beispielsweise acht oder mehr Regalelementen 60 aufgebaut, welche eine Vielzahl von Kassettenfächern 62, vorzugsweise in übereinanderliegenden Reihen angeordnet, aufweisen. Die Regaltürme 16a, b, c sind dabei so drehbar, daß die Regalelemente mit ihrer Frontseite 64 parallel zu der ersten Bahn 22 oder der zweiten Bahn 24 ausgerichtet werden können. Jedes Regalelement 60, welches mit seiner Frontseite 64 parallel zur ersten Bahn 22 oder zur zweiten Bahn 24 steht, ist dabei in einer ersten Roboterzugriffsposition 66 bzw. zweiten Roboterzugriffsposition 68. Vorzugsweise ist bei parallelen Bahnen 22 und 24 jeder Regaldrehturm in eine Stellung bringbar, in welcher sowohl die Kassettenfächer 62 eines Regalelements 60 in der ersten Roboterzugriffsposition 66 und die Kassettenfächer 62 eines weiteren Regalelements 60 in der zweiten Roboterzugriffsposition stehen.

Das automatische Bandbedienungsarchiv gemäß dem ersten Ausführungsbeispiel funktioniert nun so, daß zum Lesen oder Schreiben einer bestimmten Information beispielsweise der erste Roboter 26 mit seinem Greifer 58 eine Bandkassette aus den in der ersten Roboterzugriffsposition 66 stehenden Kassettenfächern 62 auswählt, herausgreift, zu einer der ersten Bandeinheiten 32a, b oder c transportiert und sie in einen Einlegeschacht 70 der jeweiligen ersten Bandeinheit 32a, b, c einführt.

Gleichzeitig kann der zweite Roboter 28 mit seinem Greifer 58 vorzugsweise eine Bandkassette von einem der Regaldrehtürme 16b oder c aus einem der in der zweiten Roboterzugriffsposition 68 stehenden Kassettenfächer 62 herausnehmen und ebenfalls zu einer der zweiten Bandeinheiten 34a, b oder c transportieren oder auch aus einer der zweiten Bandeinheiten 34a, b oder c eine Bandkassette entnehmen und in ein in der zweiten Roboterzugriffsposition 68 stehendes Kassettenfach 62 von einem der drei Regaldrehtürme 16a, b oder c einsetzen. Die Tätigkeiten der Roboter 26 und 28 sind jedoch gegeneinander austauschbar.

Bei einer bevorzugten Alternative des ersten Ausführungsbeispiels können über den Bandeinheiten 32a, b, c, wie in Fig. 2 dargestellt, auch noch Zwischenspeicherregale 72 vorgesehen sein, über welche beispielsweise die Entnahme oder das Einbringen von Bandkassetten in das Bandbedienungsarchiv erfolgt.

Der jeweilige Roboter 26 oder 28 hat dann auch auf diese Zwischenspeicherregale 72 Zugriff.

Darüber hinaus besteht aber auch noch die Möglichkeit, die Zwischenspeicherregale neben den ersten Bandeinheiten 32a, b und c anzuordnen, das heißt beispielsweise in Fortsetzung der Bandeinheiten 32a, b, c in Höhe der zweiten Bandeinheiten 34, wobei das Zwischenspeicherregal 72 dann ebenfalls lediglich im Aktionsbereich 36 des ersten Roboters 26 stehen würde.

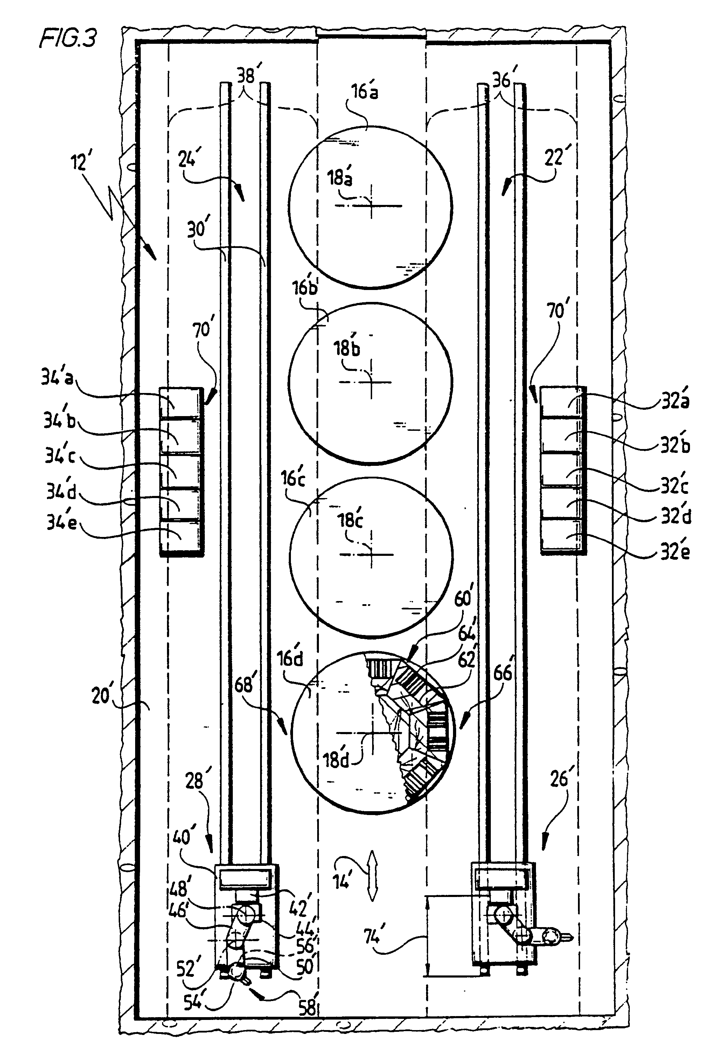

Ein zweites Ausführungsbeispiel des erfindungsgemäßen Bandbedienungsarchivs, dargestellt in Fig.3, ist insoweit als dieselben Teile Verwendung finden, mit denselben Bezugszeichen wie das erste Ausführungsbeispiel versehen, wobei die Elemente zusätzlich mit einem Strich gekennzeichnet sind. Bezüglich der detaillierten Beschreibung dieser Teile wird auf die Ausführungen zum ersten Ausführungsbeispiel verwiesen.

Im Gegensatz zum ersten Ausführungsbeispiel umfaßt der Speicher 12' nicht nur drei, sondern insgesamt vier Regaldrehtürme 16'a, b, c, d, die jedoch ebenfalls aufeinanderfolgend in Längsrichtung 14' des Speichers 12' angeordnet sind.

In gleicher Weise sind auch die Regalelemente 60' identisch wie die Regalelemente 60 des ersten Ausführungsbeispiels ausgebildet, so daß die Kassettenfächer 62' in erste oder zweite Roboterzugriffspositionen 66' bzw. 68' bringbar sind, wobei — genau wie beim ersten Ausführungsbeispiel — sämtliche erste Roboterzugriffspositionen 66' in Längsrichtung 14' des Speichers 12' nebeneinanderliegend im Aktionsbereich 66' des ersten Roboters 26' neben der ersten Bahn 22' angeordnet sind. Gleiches gilt für die zweiten Roboterzugriffspositionen 68'.

Im Gegensatz zum ersten Ausführungsbeispiel sind bei dem zweiten Ausführungsbeispiel gemäß Fig. 3 die ersten Bandeinheiten 32' und zweiten Bandeinheiten 34' nicht zwischen den Bahnen 22' und 24' angeordnet, sondern jeweils dem Speicher 12' gegenüberliegend und vorzugsweise mittig desselben, so daß bei den in Fig. 3 dargestellten ersten Bandeinheiten 32'a, b, c, d, e und 34'a, b, c, d, e diese jeweils, bezogen auf die Längsrichtung 14', in Höhe der beiden mittleren Regaldrehtürme 16'b und 16'c stehen.

Damit ist die Möglichkeit geschaffen, daß die Bahnen 22' und 24' kürzer gewählt werden können, so daß sich diese nur noch so weit längs des Speichers 12' erstrecken müssen, daß die Roboter 26' und 28' Zugriff zu allen Regaldrehtürmen 16'a, b, c, d haben.

Vorzugsweise sind die Bahnen 22' und 24' noch um ein Stück 74' verlängert, welches so bemessen ist, daß der jeweilige Roboter 26' oder 28' so weit verfahren werden kann, daß er nicht mehr in Höhe eines der Regaldrehtürme 16'a, b, c, d steht.

Ferner besteht bei dem zweiten, in Fig. 3 dargestellten Ausführungsbeispiel,die Möglichkeit, die Zwischenspeicherregale 72' in Längsrichtung 14' auf die Bandeinheiten 32' oder 34' folgend anzuordnen.

6

Vom Prinzip her funktioniert das zweite Ausführungsbeispiel des erfindungsgemäßen vollautomatischen Bandbedienungsarchivs in gleicher Weise wie das erste Ausführungsbeispiel, das heißt, jeder der Roboter entnimmt oder setzt Bandkassetten in in der jeweiligen Roboterzugriffsposition stehende Kassettenfächer ein und transportiert diese entweder zu der jeweiligen Bandeinheit 32' bzw. 34' oder holt sie von dieser ab.

Beispielsweise funktioniert dies so, daß das vollautomatisch arbeitende Bandbedienungsarchiv seine "Befehle" von einer zeichnerisch nicht dargestellten Großrechnereinheit erhält, die üblicherweise abseits von dem Bunker, in dem das Bandbedienungsarchiv installiert ist, steht. Die Verbindung zwischen der CPU-Großrechnereinheit und dem Bandbedienungsarchiv wird über ein Kabelsystem hergestellt. Die CPU-Großrechnereinheit erteilt zum Ausführen eines bestimmten Lese- oder Schreibvorgangs zunächst einem, egal welchem, der beiden Roboter 26' oder 28' den "Befehl" aus einem bestimmten Regaldrehturm 16a, b, c oder d des Speichers 12' eine Bandkassette zu holen und diese zu einer der Bandeinheiten 32'a, b, c, d oder e bzw. 34'a, b, c, d oder e zu bringen und dort einzulegen.

Gleichzeitig ergeht an den ausgewählten Drehturm 16'a, b, c oder d von der CPU-Großrechnereinheit die Order, sich so in Richtung auf den beauftragten Roboter 26' oder 28' zu drehen, daß die zu entnehmende Bandkassette in der Roboterzugriffsposition 66' oder 68' steht, wobei diese vorzugsweise so ist, daß die Bandkassette im rechten Winkel zur Bahn 22' bzw. 24', das heißt beim bevorzugten Ausführungsbeispiel der Fig. 3, im rechten Winkel zur Längsrichtung 14' des Speichers 12', ausgerichtet ist und dadurch für den Greifer 58' des Roboters 26' bzw. 28' entnehmbar.

Die Steuerung und Drehung des Regaldrehturms 16'a, b, c oder d erfolgt über einen im Drehturm eingebauten, zeichnerisch nicht dargestellten elektromotorischen Antrieb und eine ebenfalls eingebaute Sensorsteuerung.

Vorzugsweise mit Hilfe eines Barcodelasers oder eines anderen im Greifer 58' installierten Lesesystems des Roboters 26' oder 28' kann über den Barcode auf der Bandkassette diese als die richtige erkannt und vom Greifer 58' aus dem entsprechenden Kassettenfach 62' des jeweiligen Regaldrehturms 16'a, b oder c entnommen werden.

Diese Bandkassette wird nur mit Hilfe des Roboters 26' oder 28' zur jeweiligen Bandeinheit 32'a, b, c, d oder e bzw. 34'a, b, c, d oder e befördert und dort in die entsprechende Bandeinheit eingelegt.

Der Rücktransport der Kassette von der Bandeinheit von 32'a, b, c, d oder e bzw. 34'a, b, c, d oder e zum jeweiligen Regaldrehturm 16'a, b, c oder d erfolgt in umgekehrter Reihenfolge, wobei alle "Befehle"hierzu wieder von der CPU-Großrechnereinheit ausgehen.

Das vollautomatisch arbeitende Bandbedienungsarchiv ist so konzipiert, daß jede Bandkassette in jede der Bandeinheiten 32'a, b, c, d oder e oder 34'a, b, c, d oder e eingelegt werden kann und in jeder der Bandeinheiten der gesamte Informationsgehalt einer Bandkassette zugänglich ist.

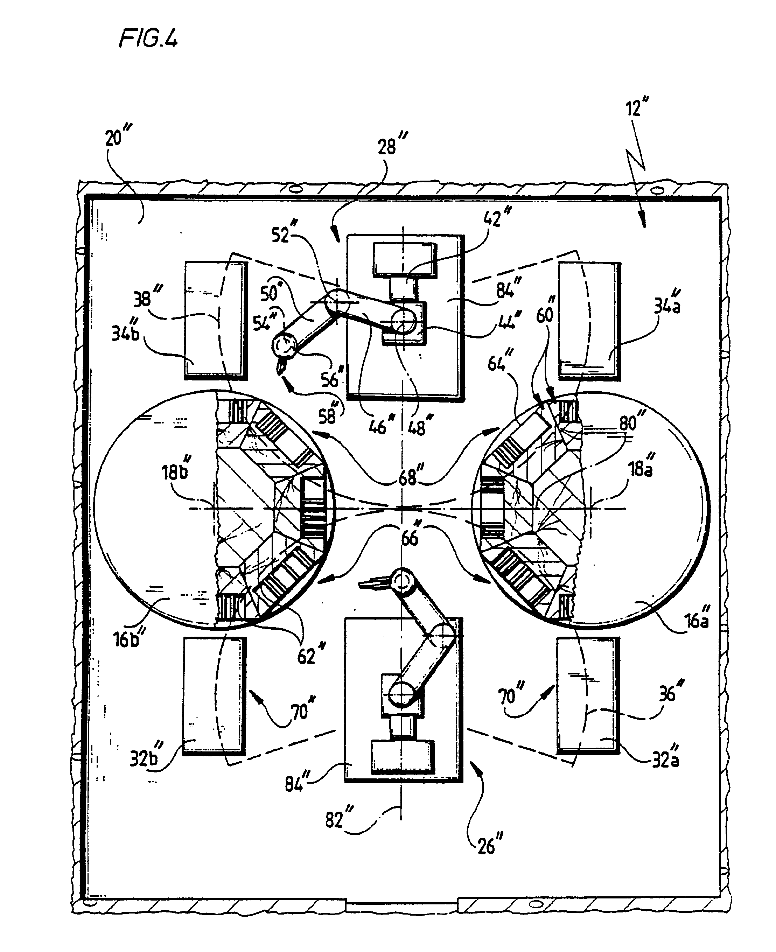

Bei einem weiteren Ausführungsbeispiel eines erfindungsgemäßen Bandbedienungsarchivs, dargestellt in Fig. 4, tragen diejenigen Elemente, die mit denen des ersten Ausführungsbeispiels identisch sind, dieselben Bezugszeichen. Diese sind jedoch mit zwei Strichen versehen. Bezüglich deren detaillierter Beschreibung kann somit auf das erste Ausführungsbeispiel verwiesen werden.

Der Speicher 12" im dritten Ausführungsbeispiel umfaßt zwei Regaldrehtürme 16"a und 16"b, welche um zueinander parallele Drehachsen 18" drehbar sind. Vorzugsweise sind diese beiden Regaldrehtürme 16"a und 16"b so dicht beieinander, daß die Regalelemente 60" in Richtung einer Verbindungslinie 80" der beiden Drehachsen 18" einen geringen Abstand voneinander aufweisen.

Beiderseits der Verbindungslinie sind ein erster Roboter 26" und ein zweiter Roboter 28" symmetrisch zu einer Mittelsenkrechten 82" der Verbindungslinie 80" angeordnet, so daß deren Greifer 58" sowohl Zugriff zu den Kassettenfächern 62" des Regaldrehturms 16"a als auch des Regaldrehturms 16"b haben. Vorzugsweise ist hierzu die erste Drehachse 48" der Roboter 26" bzw. 28" auf der Mittelsenkrechten angeordnet.

Die Roboter 26" und 28" sind bis auf das fehlende Fahrgestell 40 mit den Robotern 26 und 28 identisch. Anstelle des Fahrgestells 40 steht die Säule 42" auf einem stationären Sockel 84".

Die Regalelemente 60" der Regaldrehtürme 16"a, b stehen dann in der ersten Roboterzugriffsposition 66", wenn deren Frontseiten 64" vorzugsweise einen spitzen Winkel mit der Mittelsenkrechten 82" einschließen. Vorzugsweise liegt dieser Winkel in der Größenordnung von ungefähr 45°, wobei dann die Frontseite 64" des jeweiligen Regalelements 60" des ersten Regaldrehturms 16"a mit der Frontseite 64" des in der entsprechenden Stellung stehenden Regalelements 60" des Regaldrehturms 16"b einen Winkel in der Größenordnung von 90° einschließt.

Gleiches gilt für die zweiten Roboterzugriffspositionen 68" der Regaldrehtürme 16"a und 16"b.

Vorzugsweise liegen die ersten Roboterzugriffspositionen 66" bzw. die zweiten Roboterzugriffspositionen 68" der Kassettenfächer 62" des Regaldrehturms 16"a und 16"b symmetrisch zu der Mittelsenkrechten 82".

In jedem Fall ist die Länge der Arme 46" und 50" so bemessen, daß sämtliche Kassettenfächer 62" eines Regalelements 60" vom Roboter 26" bzw. 28" gegriffen werden können.

Die Bandeinheiten 32″ und 34″ sind vorzugsweise seitlich der Mittelsenkrechten 82″ angeordnet, sie können jedoch auch an anderer Position im Aktionsbereich des jeweiligen Roboters 26″ bzw. 28″ angeordnet sein.

Vorzugsweise sind auf gegenüberliegenden Seiten der Mittelsenkrechten 82″ die ersten Bandeinheiten 32″a und 32″b bzw. zweite Bandeinheiten 34″a und 34″b angeordnet und liegen damit im Aktionsbereich 36″ bzw. 38″ des Roboters 26″ bzw. 28″, wobei ihre Bandeinlegeöffnungen 70″ dem jeweiligen Roboter 26″ bzw. 28″ zugeordnet sind.

## Patentansprüche

1. Vollautomatisch arbeitendes Bandbedienungsarchiv mit einem Kassettenfächer für Bandkassetten aufweisenden Speicher (12), der als Wendespeicher mit mindestens zwei unabhängig voneinander bewegbaren Wendeeinheiten (16) ausgebildet ist, wobei sämtliche Kassettenfächer (62) jeder Wendeeinheit (16) sowohl in eine erste Roboterzugriffsposition (66) als auch in eine zweite Roboterzugriffsposition (68) bringbar sind, mit einem ersten Roboter (26) und einem zweiten Roboter (28) zum Transportieren der Bandkassetten zwischen dem Speicher (12) und mindestens einer jedem Roboter 26, 28) ausschließlich zugeordneten Bandeinheit (32, 34), wobei dem ersten Roboter (26) die ersten Roboterzugriffspositionen (66) und dem zweiten Roboter (28) die zweiten Roboterzugriffspositionen (68) zugeordnet sind und wobei, um ein gleichzeitiges Arbeiten der Roboter zu ermöglichen, jeder Roboter einen Aktionsbereich (36, 38) aufweist, der sich mit dem des jeweils anderen Roboters (28, 26) nicht überschneidet, **dadurch gekennzeichnet,** daß die Wendeeinheiten auf einer Bodenfläche (20) des Speichers (12) in einer Längsrichtung (14) aufeinanderfolgend angeordnet sind, daß der erste Roboter (26) und der zweite Roboter (28) längs einer ersten Bahn (22) bzw. längs einer zweiten Bahn (24) verfahrbar angeordnet sind, daß die erste (22) und die zweite Bahn (24) im wesentlichen parallel zueinander und parallel zu der Längsrichtung (14) verlaufen und daß die ersten Roboterzugriffspositionen (66) längs der ersten Bahn (22) und die zweiten Roboterzugriffspositionen (68) längs der zweiten Bahn (24) angeordnet und von im wesentlichen einander gegenüberliegenden Außenseiten des Wendespeichers (12) für die Roboter (26, 28) zugänglich sind.

2. Bandbedienungsarchiv nach Anspruch 1, dadurch gekennzeichnet, daß jede Wendeeinheit ein drehbarer Regalturm (16) ist.

3. Bandbedienungsarchiv nach Anspruch 1 oder 2, dadurch gekennzeichnet, daß der Speicher (12) so ausgebildet ist, daß die Kassettenfächer (62) in der ersten (66) und der zweiten Roboterzugriffsposition (68) stets eine definierte Position einnehmen.

4. Bandbedienungsarchiv nach Anspruch 2 oder 3, dadurch gekennzeichnet, daß die Regaltürme (16) aus Regalelementen (60)aufgebaut sind, die eine Vielzahl von in übereinander liegenden Reihen angeordneten Kassettenfächern (62) aufweisen, und daß jedes Regalelement (60) als Ganzes in die erste oder die zweite Roboterzugriffsposition (66, 68) bringbar ist.

5. Bandbedienungsarchiv nach Anspruch 4, dadurch gekennzeichnet, daß jedes Regalelement (60) in der jeweiligen Roboterzugriffsposition (66, 68) mit seiner Frontseite (64) parallel zur ersten Bahn (22) oder zur zweiten Bahn (24) steht.

6. Bandbedienungsarchiv nach Anspruch 4 oder 5, dadurch gekennzeichnet, daß die in einem in der Roboterzugriffsposition (66, 68) stehenden Kassettenfach (62) angeordnete Bandkassette in einem rechten Winkel zur Bahn (22, 24) des jeweils zugreifenden Roboters (26, 28) ausgerichtet ist.

7. Bandbedienungsarchiv nach einem der Ansprüche 2 bis 6, dadurch gekennzeichnet, daß die drehbaren Regaltürme (16) mit ihren Drehachsen (18) parallel zueinander ausgerichtet sind.

8. Bandbedienungsarchiv nach einem der voranstehenden Ansprüche, dadurch gekennzeichnet, daß die dem jeweiligen Roboter (26, 28) zugeordnete Bandeinheit (32, 34) und der Wendespeicher (12) auf derselben Seite der Bahn (22, 24) des jeweiligen Roboters (26, 28) angeordnet sind.

9. Bandbedienungsarchiv nach einem der Ansprüche 1 bis 7, dadurch gekennzeichnet, daß die Bandeinheiten (32, 34) und der Wendespeicher (12) zwischen den Bahnen (22, 24) der Roboter (26, 28) angeordnet sind.

10. Bandbedienungsarchiv nach einem der Ansprüche 1 bis 7, dadurch gekennzeichnet, daß die dem jeweiligen Roboter (26, 28) zugeornete Bandeinheit (32, 34) und der Wendespeicher (12), bezogen auf die Bahn (22, 24) des jeweiligen Roboters (26, 28) einander gegenüberliegend angeordnet sind.

11. Bandbedienungsarchiv nach einem der Ansprüche 1 bis 7 oder 10, dadurch gekennzeichnet, daß die Bandeinheiten (32, 34) auf zwei sich gegenüberliegenden Seiten des Speichers (12) angeordnet sind und jeweils einen Abstand zum Speicher (12) aufweisen und daß in diesen Abständen je einer der Roboter (26, 28) angeordnet ist.

12. Bandbedienungsarchiv nach einem der voranstehenden Ansprüche, dadurch gekennzeichnet, daß die Bandeinheiten (32, 34) und der Wendespeicher (12), bezogen auf die Bahn (22, 24) des jeweiligen Roboters (26, 28) in Längsrichtung derselben aufeinanderfolgend angeordnet sind.

13. Bandbedienungsarchiv nach einem der voranstehenden Ansprüche, dadurch gekennzeichnet, daß die dem ersten Roboter (26) zugeordnete Bandeinheit (32) gegenüber der dem zweiten Roboter (28) zugeordneten Bandeinheit (34) in Längsrichtung der Bahnen (22, 24) versetzt angeordnet sind.

14. Bandbedienungsarchiv nach einem der voranstehenden Ansprüche, dadurch gekennzeichnet, daß die Bahnen (22, 24) mindestens eine Roboterlänge über ein Ende des Speichers (12) hinausgeführt sind.

15. Bandbedienungsarchiv nach einem der voranstehenden Ansprüche, dadurch gekennzeichnet, daß eine Steuerung vorgesehen ist, welche einem der beiden Roboter (26, 28) den Befehl gibt, eine Bandkassette aus einer bestimmten Wendeeinheit (16) zu entnehmen und in eine der Bandeinheiten (32, 34) einzulegen und gleichzeitig dieser Wendeeinheit (16) die Order gibt, sich so in Richtung auf den beauftragten Roboter (26, 28) zu drehen, daß die jeweilige Bandkassette in der Roboterzugriffsposition (66, 68) steht.

16. Bandbedienungsarchiv nach einem der voranstehenden Ansprüche, dadurch gekennzeichnet, daß jeder Roboter (26, 28) einen Greifer (58) mit einem in diesem installierten Lesesystem aufweist.

17. Bandbedienungsarchiv nach Anspruch 16, dadurch gekennzeichnet, daß das Lesesystem ein Barcodelesesystem ist.

## Claims

1. Fully automatic tape-handling archive comprising a storage facility (12) having cassette compartments for tape cassettes, said storage facility being designed as a revolving storage facility having at least two revolving units (16) movable independently of one another, all the cassette compartments (62) of each revolving unit (16) capable of being brought into both a first robot access position (66) and a second robot access position (68), also comprising a first robot (26) and a second robot (28) for transporting the tape cassettes between the storage facility (12) and at least one tape unit (32, 34) associated exclusively with each robot (26, 28), the first robot access positions (66) being associated with the first robot (26) and the second robot access positions (68) with the second robot (28) and, to facilitate simultaneous operation of the robots, each robot having a zone of activity (36, 38) not overlapping with that of the respective other robot (28, 26), characterized in that the revolving units are arranged in succession in a longitudinal direction (14) on a floor area (20) of the storage facility (12), that the first robot (26) and the second robot (28) are arranged for displacement along a first track (22) and along a second track (24), respectively, that the first track (22) and the second track (24) extend essentially parallel to one another and parallel to the longitudinal direction (14) and that the first robot access positions (66) are arranged along the first track (22) and the second robot access positions (68) along the second track (24) and are accessible for the robots (26, 28) from outer sides of the revolving storage facility (12) located essentially opposite one another.

2. Tape-handling archive as defined in claim 1, characterized in that each revolving unit is a rotatable carousel of shelves (16).

3. Tape-handling archive as defined in claim 1 or 2, characterized in that the storage facility (12) is designed such that the cassette compartments (62) always take up a defined position in the first (66) and the second robot access positions (68).

4. Tape-handling archive as defined in claim 2 or 3, characterized in that the shelf carousels (16) are constructed of shelf elements (60) having a plurality of cassette compartments (62) arranged in superposed rows, and that each shelf element (60) is capable of being brought as a whole into the first or the second robot access position (66, 68).

5. Tape-handling archive as defined in claim 4, characterized in that the front side (64) of each shelf element (60) is parallel to the first track (22) or the second track (24) in the respective robot access position (66, 68).

6. Tape-handling archive as defined in claim 4 or 5, characterized in that the tape cassette arranged in a cassette compartment (62) located in the robot access position (66, 68) is aligned at right angles to the track (22, 24) of the respective accessing robot (26, 28).

7. Tape-handling archive as defined in any of claims 2 to 6, characterized in that the rotatable shelf carousels (16) are aligned with their axes of rotation (18) parallel to one another.

8. Tape-handling archive as defined in any of the preceding claims, characterized in that the tape unit (32, 34) associated with the respective robot (26, 28) and the revolving storage facility (12) are arranged on the same side of the track (22, 24) of the respective robot (26, 28).

9. Tape-handling archive as defined in any of claims 1 to 7, characterized in that the tape units (32, 34) and the revolving storage facility (12) are arranged between the tracks (22, 24) of the robots (26, 28).

10. Tape-handling archive as defined in any of claims 1 to 7, characterized in that the tape unit (32, 34)

9

associated with the respective robot (26, 28) and the revolving storage facility (12) are arranged opposite one another in relation to the track (22, 24) of the respective robot (26, 28).

11. Tape-handling archive as defined in any of claims 1 to 7 or 10, characterized in that the tape units (32, 34) are arranged on two opposite sides of the storage facility (12) and are each spaced from the storage facility (12) and that one of the robots (26, 28) is arranged in each of these spaces.

12. Tape-handling archive as defined in any of the preceding claims, characterized in that the tape units (32, 34) and the revolving storage facility (12) are arranged in succession, in relation to the track (22, 24) of the respective robot (26, 28), in the longitudinal direction thereof.

13. Tape-handling archive as defined in any of the preceding claims, characterized in that the tape unit (32) associated with the first robot (26) is offset relative to the tape unit (34) associated with the second robot (28) in the longitudinal direction of the tracks (22, 24).

14. Tape-handling archive as defined in any of the preceding claims, characterized in that the tracks (22, 24) extend beyond one end of the storage facility (12) by at least one robot length.

15. Tape-handling archive as defined in any of the preceding claims, characterized in that a control means is provided for giving one of the two robots (26, 28) the command to remove a tape cassette from a specific revolving unit (16) and to insert this cassette into one of the tape units (32, 34) and for simultaneously giving this revolving unit (16) the command to rotate in the direction towards the commanded robot (26, 28) such that the respective tape cassette is in the robot access position (66, 68).

16. Tape-handling archive as defined in any of the preceding claims, characterized in that each robot (26, 28) comprises a gripping means (58) with a read system installed therein.

17. Tape-handling archive as defined in claim 16, characterized in that the read system is a bar code reading system.

## Revendications

1. Archives de traitement de bande tout à fait automatiques comportant un magasin (12) présentant des rayons pour cassettes de bande, lequel magasin est conformé en magasin tournant avec au moins deux unités tournantes (16) qui peuvent être mis en mouvement indépendamment l'une de l'autre, tous les rayons à cassettes (62) de chaque unité tournante (16) pouvant être amenés dans une première position d'accès de robot (66) ainsi que dans une seconde position d'accès de robot (68), ces archives comportant en outre un premier robot (26) et un second robot (28) pour transporter les cassettes de bande entre le magasin (12) et au moins une unité de défilement de bande (32, 34) affectée exclusivement à chaque robot (26, 28), les premières positions d'accès de robot étant affectées au premier robot et les secondes positions d'accès de robot étant affectées au second robot et, pour permettre un travail simultané des deux robots, chaque robot présentant un rayon d'action (36, 38) qui n'est pas chevauché par celui de l'autre robot respectif (28, 26), les archives étant caractérisées en ce que les unités tournantes sont agencées sur une surface inférieure (20) du magasin (12) de manière à être situées l'une à la suite de l'autre dans la direction longitudinale (14), le premier robot (26) et le second robot (28) sont agencés de manière à pouvoir se déplacer le long d'une première voie (22), respectivement, le long d'une seconde voie (24), la première et la seconde voies (22, 24) s'étendent de manière sensiblement parallèle l'une à l'autre et parallèle à la direction longitudinale (14), les premières positions d'accès de robot (66) sont agencées le long de la première voie (22) et les secondes positions d'accès de robot (68) le long de la seconde voie (24) et sont accessibles aux robots (26, 28) par les côtés externes sensiblement en regard l'un de l'autre du magasin tournant (12).

2. Archives de traitement de bande selon la revendication 1, caractérisées en ce que chaque unité tournante est un tourniquet à rayonnages rotatif (16).

3. Archives de traitement de bande selon la revendication 1 ou 2, caractérisées en ce que le magasin (12) est conformé de telle sorte que les rayons à cassettes (62) adoptent toujours une position définie dans la première (66) et la seconde position d'accès de robot (68).

4. Archives de traitement de bande selon la revendication 2 ou 3, caractérisées en ce que les tourniquets à rayonnages (16) sont constitués d'éléments de rayonnages (60) qui présentent une série de rayons à cassettes (62) agencées en rangées disposées l'une au-dessus de l'autre et chaque élément de rayonnage (60) peut être ramené dans son ensemble dans la première ou la seconde position d'accès de robot (66, 68).

5. Archives de traitement de bande selon la revendication 4, caractérisées en ce que chaque élément de rayonnage (60) en position d'accès de robot respective (66, 68) est parallèle dans sa partie frontale (64) avec la première voie (22) ou la seconde voie (24).

6. Archives de traitement de bande selon la revendication 4 ou 5, caractérisées en ce que la cassette de bande agencée dans un rayon à cassettes (62) qui se trouve en position d'accès de robot (66, 68) est orientée à angle droit avec la voie (22, 24) du robot (26, 28) qui y a respectivement accès.

7. Archives de traitement de bande selon l'une des revendications 2 à 6, caractérisées en ce que les tourniquets à rayonnages rotatifs (16) sont orientés avec leurs axes de rotation (18) parallèles l'un à l'autre.

8. Archives de traitement de bande selon l'une des revendications précédentes, caractérisées en ce que l'unité de défilement de bande (32, 34) affectée à chaque robot respectif (26, 28) et le magasin tournant (12) sont agencés sur le même côté de la voie (22, 24) du robot respectif (26, 28).

9. Archives de traitement de bande selon l'une des revendications 1 à 7, caractérisées en ce que les unités de défilement de bande (32, 34) et le magasin tournant (12) sont agencés entre les voies (22, 24) des robots (26, 28).

10. Archives de traitement de bande selon l'une des revendications 1 à 7, caractérisées en ce que l'unité de défilement de bande (32, 34) affectée à chaque robot respectif (26, 28) et le magasin tournant (12) sont agencés en regard l'un de l'autre vis-à-vis de la voie (22, 24) des robots respectifs (26, 28).

11. Archives de traitement de bande selon l'une des revendications 1 à 7 ou 10, caractérisées en ce que les unités de défilement de bande (32, 34) sont agencées sur deux côtés en regard l'un de l'autre du magasin (12) et présentent respectivement un espacement vis-à-vis du magasin (12) qui reçoit l'un des robots (26, 28), respectivement.

12. Archives de traitement de bande selon l'une des revendications précédentes, caractérisées en ce que les unités de défilement de bande (32, 34) et le magasin tournant (12) sont agencés par rapport à la voie (22, 24) du robot respectif (26, 28) dans la direction longitudinale de celles-ci l'un à la suite de l'autre.

13. Archives de traitement de bande selon l'une des revendications précédentes, caractérisées en ce que l'unité de défilement de bande (32) affectée au premier robot (26) est agencée décalée dans la direction longitudinale des voies (22, 24) en regard de l'unité de défilement de bande (34) affectée au second robot (28).

14. Archives de traitement de bande selon l'une des revendications précédentes, caractérisées en ce que les voies (22, 24) dépassent au moins d'une longueur de robot à une extrémité du magasin (12).

15. Archives de traitement de bande selon l'une des revendications précédentes, caractérisées en ce qu'il est prévu une commande qui donne à l'un des deux robots (26, 28) l'ordre de retirer une cassette de bande d'une certaine unité tournante (16) et de la mettre en place dans l'une des unités de défilement de bande (32, 34) et donne simultanément à cette unité tournante (16) l'ordre de tourner dans la direction du robot concerné (26, 28) en sorte que la cassette de bande respective se trouve dans la position d'accès de robot (66, 68).

16. Archives de traitement de bande selon l'une des revendications précédentes, caractérisées en ce que chaque robot (26, 28) présente une pince (58) avec un système de lecture qui y est incorporé.

17. Archives de traitement de bande selon la revendication 16, caractérisées en ce que le système de lecture est un système à code à barres.

11

FIG.1

FIG.2

FIG.3

## FIG.4